# FASCICULE DE BREVET EUROPEEN

(11) **EP 1 764 694 B1**
(45) Date de publication et mention de la délivrance du brevet: **30.07.2008**
(21) Numéro de dépôt: 05291923.0
(22) Date de dépôt: 16.09.2005
(51) Int. Cl.: G06F 11/16

(54) **Procédé et système de contrôle redondant de calculateurs sécurisés**
Redundanzkontrollverfahren und Vorrichtung für sichere Rechnereinheiten
Redundant control method and apparatus for fail safe computers

(43) Date de publication de la demande: 21.03.2007
(73) Titulaire: Siemens Transportation Systems S.A.S., 92542 Montrouge (FR)
(72) Inventeur: Fumery, Benoit, 91440 Bures sur Yvette (FR); Essame, Didier, 92350 Le Plessis Robinson (FR); Forin, Philippe, 78280 Guyancourt (FR)
(74) Mandataire: Fischer, Michael

(56) Documents cités:
- EP-A- 1 283 468
- GB-A- 2 315 587
- US-A- 3 864 670
- US-A- 4 823 256
- US-A1- 2005 149 795

## Description

L'invention se rapporte à des systèmes de traitement nécessitant une grande sûreté de fonctionnement, notamment les systèmes de traitement utilisés dans le transport de personnes. Plus particulièrement, l'invention concerne un système de traitement disposant de deux calculateurs, a priori intrinsèquement sûrs, pour assurer un niveau de sécurité suffisant tout en assurant, en particulier par une mise en redondance, une bonne disponibilité du système en cas de défaillance de l'un des calculateurs.

Deux exemples d'un tel système hors du domaine des transports sont décrits dans US4823256 et US2005/0149795 où un procédé de contrôle du système comportant deux calculateurs redondant disposant chacun de sorties sécurisées pouvant prendre un état restrictif ou permissif. D1 = US-A-4 823 256 divulgue un procédé de contrôle d'un système comportant au moins deux calculateurs disposant chacun de sorties sécurisées pouvant prendre un état restrictif ou permissif. Lesdits calculateurs peuvent également échanger des informations entre eux et chaque calculateur disposant d'un même programme de calcul pour définir des états de sortie, un calculateur étant maître et l'autre esclave et fonctionnant selon un mode redondant, appelé "diverged mode", ce mode comprenant également les étapes de réception, comparaison, détection et d'interdiction de transition d'un état de commande restrictif vers un état permissif en cas d'anomalie d'un des calculateurs. A l'inverse de l'invention, au moins un des calculateurs ou un de leur programme identique de calcul peut être défaillant, c'esi-à-dire non intrinsèquement sûr. Les calculateurs peuvent échanger des informations entre eux, chaque calculateur disposant du même programme de calcul pour définir des états des sortie, un calculateur étant maître et l'autre esclave et fonctionnant selon un mode redondant correspondant à un mode divergent qui comprend des étapes de réception, comparaison, détection et d'interdiction de transition d'un état de commande restrictif vers un état permissif en cas d'anomalie d'un des calculateurs.

Des applications relatives à du traitement de contrôle/commande en toute sécurité sont couramment utilisées dans les transports automatisés, tel que, par exemple, les trains urbains automatiques. Ces applications utilisent des calculateurs intrinsèquement sûrs qui sont capables de garantir un fonctionnement en toute sécurité et capable de détecter une erreur de fonctionnement dans le traitement effectué. Un exemple de calculateur est décrit dans EP-A-1 089 175. Le calculateur met en oeuvre une technique qui consiste à détecter les erreurs au moyen d'un système de codage des informations et, le cas échéant, à mettre les commandes dans une position sûre pour les passagers, pouvant aller jusqu'à l'arrêt du train.

L'arrêt d'urgence d'un train n'est bon ni pour les passagers, ni pour la rentabilité économique des trains. Pour cette raison, le système de commande doit être doublé pour pouvoir tolérer des fautes : les calculateurs sont organisés en paires, pour que l'un puisse remplacer l'autre en cas de défaillance. Cependant, cette duplication peut être source de nouveaux problèmes de sécurité. On peut imaginer, en effet, de nombreux scénarios dans lesquels un calculateur de secours n'ayant pas une vue cohérente de l'environnement pourrait compromettre la sécurité de la commande s'il venait à prendre la main.

Pour éviter l'incohérence de deux calculateurs, il est connu de s'assurer qu'ils reçoivent et traitent exactement les mêmes informations, et dans le même ordre. Toutefois, malgré l'assurance d'avoir les mêmes entrées, il n'est pas exclu que les deux calculateurs puissent fournir des résultats différents qui peuvent être sûrs pris individuellement mais qui peuvent entraîner une défaillance plus importante s'ils persistent. Egalement, une divergence de résultat peut très bien n'être que temporaire sans que cela pause un problème sérieux et sans qu'il ne soit nécessaire de prendre des mesures de sécurité pouvant entraîner une nuisance au trafic.

Un système de traitement redondant est dévoilé par l'article de D. Essamé, J. Arlat and D. Powell, "PADRE: a Protocol for Asymmetric Duplex Redundancy", publié dans Dependable Computing for Critical Applications (DCCA-7), C. B. Weinstock and J. Rushby, Eds., et dans Dependable Computing and Fault-Tolerant Systems 12, pp. 229-248, IEEE Computer Society Press, 1999 (Proc. IFIP 7th Working Conf. held in San Jose, CA, USA, January 1999). Cet article décrit d'un point de vue théorique un système asynchrone de gestion de redondances duplexées à base d'unité de traitement intrinsèquement sûres, En particulier, cet article introduit le principe de la détection des incohérences potentielles de contexte entre unités de traitement redondantes. Cependant l'asynchronisme de ce mécanisme de gestion et le manque d'informations précises sur la manière de détecter les incohérences de contexte font que le mécanisme de cet article n'est pas totalement applicable à un système de contrôle/commande fournissant des sorties tout ou rien sécurisées nécessitant une forte réactivité.

L'invention tel que revendiqué dans la revendication 1 propose donc de réaliser un système redondant sécurisé utilisant deux calculateurs intrinsèquement sûrs disposant chacun de sorties tout ou rien sécurisées et mettant en oeuvre un procédé de gestion de la redondance synchrone. En particulier, l'invention propose un mécanisme adapté pour la détection d'incohérences de contexte sur des sorties tout ou rien sécurisées et notamment directement applicable dans les systèmes ferroviaires. Le procédé va ainsi permettre de gérer des incohérences sur les sorties des deux calculateurs lorsque ceux-ci fonctionnent en mode redondé.

D'autres améliorations sont proposées par les revendications de procédé dépendantes 2 à 6.

La revendication indépendante 7 propose un système correspondant à l'une quelconque des revendications de procédé.

Ce nouveau protocole de gestion de redondance ne cherche pas à assurer et à garantir en sécurité de façon permanente l'égalité des contextes des deux calculateurs. Sa mise en oeuvre sur le plan sécurité est plus souple, elle part de la définition d'un nouveau principe, qui est le suivant: toute divergence des contextes entre les calculateurs demeure non dangereuse, tant que celle-ci n'apparaît pas de façon contraire à la sécurité sur les "variables sécuritaires" sortant du calculateur (aux sorties "tout ou rien" sécuritaires ou aux sorties de messages de sécurité à transmettre). A l'opposé, une divergence des contextes risque de devenir dangereuse, si pour un des deux calculateurs il existe au moins une des sorties sécuritaires émises par un système à l'extérieur plus permissive que celle qui l'a calculée. Dans ce cas, la sécurité peut être compromise et le calculateur concerné ne devrait plus être autorisé à reprendre la main. En effet si cela se produit, on se retrouve dans une configuration qui serait normalement impossible avec un seul calculateur; la sécurité ne serait donc plus forcément garantie. Il est à rappeler que chaque calculateur étant intrinsèquement sûr, il peut en cas de défaillance émettre des sorties plus restrictives mais jamais l'inverse, c'est-à-dire plus permissives.

Le protocole proposé ici, réalise les contrôles garantissant la sécurité essentiellement en aval des traitements des calculateurs (au niveau d'un logiciel, aussi dénominé "Applieatif"); ces contrôles sont liés au principe de base défini précédemment et interviennent principalement sur toutes les sorties sécuritaires du calculateur.

Le contrôle en sécurité de l'égalité des contextes entre les deux calculateurs devient ainsi seulement nécessaire au démarrage ou au début de la réintégration d'un calculateur qui aurait été auparavant isolé suite par exemple à un défaut de fonctionnement.

Ce nouveau protocole ne nécessite plus réellement un contrôle en sécurité de l'égalité des "Entrées" ou des "Messages reçus" au niveau des calculateurs; il n'y aura donc pas d'exigence due au protocole sur la nature des entrées, en particulier, les applicatifs sécuritaires pourront également traiter des entrées fonctionnelles.

De même, comme ce protocole opère des contrôles sécuritaires principalement en aval de l'application, il n'y aura pas besoin de garantir que les logiciels des applicatifs des deux calculateurs exécutent bien le même programme au même moment.

Ainsi ce protocole n'impose pas que l'ensemble des logiciels traités par les calculateurs soient tous liés à des buts sécuritaires: des variables ou des procédures à caractère non sécuritaire peuvent coexister au sein des programmes.

Ce protocole permet également la mise en "OU câblé" des sorties "tout ou rien" de sécurité entre les deux calculateurs.

Les contrôles associés au principe de base défini précédemment et exercés entre les sorties de sécurité des deux calculateurs, permettent de faciliter la mise en oeuvre sur le plan sécurité d'une fonction de réintégration, par exemple d'un des deux calculateurs.

Ainsi, l'invention est un procédé de contrôle d'un système comportant au moins deux calculateurs disposant chacun de sorties sécurisées pouvant prendre un état restrictif ou un état permissif. Il est bon de préciser que l'état restrictif est un état intrinsèquement sûr et que tout passage même intempestif à cet état n'est jamais contraire à la sécurité. Les dits calculateurs peuvent échanger des informations entre eux. Chaque calculateur dispose d'un même programme de calcul pour définir des états de sortie. Un calculateur est maître, et l'autre est esclave. Ledit procédé comporte un fonctionnement en mode redondé dans lequel chacun des calculateurs calcule des états de sortie, et comportant les étapes de réception des états de réception des états de sortie déterminés par l'autre calculateur ; de comparaison, pour chaque sortie, des états déterminés par les deux calculateurs ; de détection d'un état de divergence de fonctionnement si les deux calculateurs ont déterminé deux états différents pour une même sortie sécurisée ; si une divergence est détectée pour au moins une sortie sécurisée, de détermination de l'état de ladite sortie divergente en interdisant une transition d'un état restrictif vers un état permissif.

Pour une sortie temporisable, l'état de la sortie divergente garde le niveau déterminé lors du cycle de calcul précédent. Pour une sortie non temporisable, l'état de la sortie divergente prend l'état restrictif.

Selon un autre aspect, l'invention est également un système de traitement disposant de deux calculateurs sécurisés, chaque calculateur comportant des entrées pour recevoir des données de l'extérieur ; des sorties pour fournir des états de sortie pouvant prendre un état restrictif ou un état permissif; des sorties message aussi appelées sorties distantes; une mémoire pour mémoriser des programmes et des données ; au moins un processeur pour exécuter les programmes contenus dans la mémoire, notamment un programme pour déterminer l'état des sorties à partir des données d'entrées et de variables internes mémorisées dans la mémoire ; des moyens de synchronisation et de communication pour se synchroniser avec l'autre calculateur et échanger des informations avec celui-ci. Chaque calculateur comporte en outre des portions de programme d'ordinateur mémorisées dans la mémoire, lesdites portions de programme comportant des instructions exécutables par le processeur pour réaliser le procédé de contrôle de système tel que précédemment défini.

L'invention sera mieux comprise et d'autres particularités et avantages apparaîtront à la lecture de la description qui va suivre, la description faisant référence aux figures annexées parmi lesquelles :
la figure 1 représente un système de traitement selon l'invention,
la figure 2 représente un diagramme d'états de fonctionnement d'un calculateur du système de traitement,
les figures 3 à 5 représentent des organigrammes mis en oeuvre par le système de traitement pour fonctionner selon l'invention.

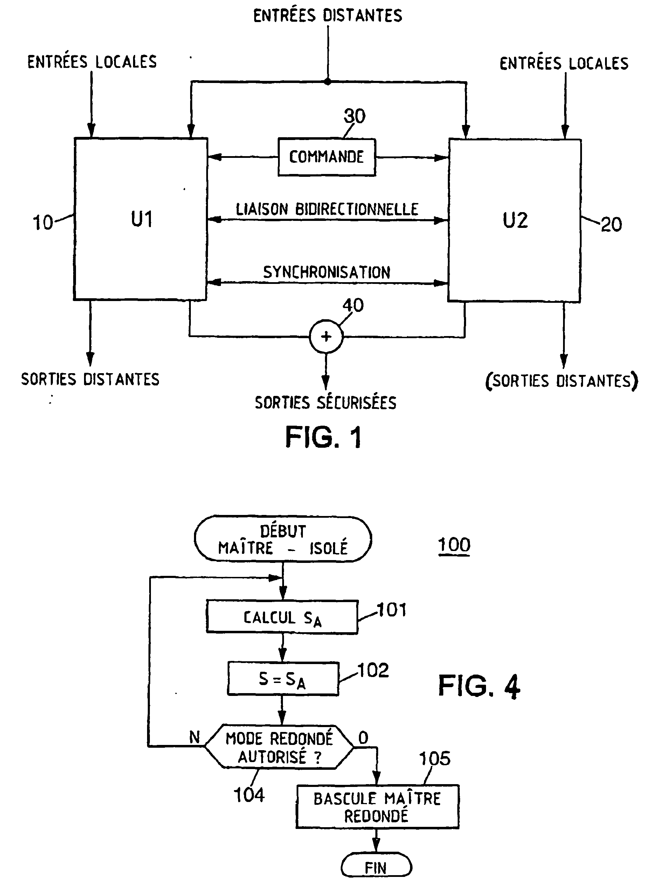

La figure 1 représente un système de traitement selon l'invention. Le système de traitement est décrit comme étant incluse dans un véhicule ferroviaire car il s'agit là d'une application correspondant au niveau de sécurité requis. Toutefois, un tel système de traitement peut être utilisé dans un équipement fixe de gestion ferroviaire ou encore dans un autre domaine que le transport ferroviaire, si ledit domaine nécessite l'utilisation de systèmes de traitement sécurisés ayant un niveau de sûreté comparable aux systèmes de transport ferroviaire. Le système de traitement comporte des premier et deuxième calculateurs 10 et 20, par exemple du type de celui décrit dans EP-A-1 089 175. Chacun des calculateurs 10 ou 20 est un calculateur intrinsèquement sûr.

Chaque calculateur 10 ou 20 dispose d'une pluralité d'entrées locales, d'une pluralité d'entrées distantes, d'une pluralité de sorties distantes, d'une pluralité de sorties sécurisées, d'entrées/sorties de synchronisation, d'entrées/sorties de liaison bidirectionnelle ainsi que d'entrées de commande. Chaque calculateur 10 ou 20 dispose en outre d'un processeur, d'une mémoire et de moyens de sécurisation. En règle générale, seule une unité (maître), par exemple le calculateur 10 émet des sorties distantes.

Les entrées distantes d'un calculateur correspondent à des messages envoyés par un système, comme une unité de gestion du trafic informant le calculateur embarqué, fournissant par exemple, la distance libre devant lui ou le séparant du prochain point d'arrêt. Les entrées locales sont reliées à des capteurs et sont échantillonnées cycliquement par le calculateur afin de prendre en compte par exemple un état physique du véhicule.

Les sorties sécurisées sont reliées à des organes qui agissent directement sur le véhicule. Ces sorties sécurisées sont des sorties pouvant prendre deux états qui sont classiquement un état restrictif et un état permissif. On parle d'état restrictif, lorsque celui-ci entraîne une action de type sécuritaire, c'est à dire qu'il déclenche ou qu'il stoppe une action afin d'amener l'organe commandé dans un état de sécurité vis à vis des passagers. A titre d'exemple, l'état restrictif d'un frein correspond au serrage du frein, et l'état restrictif de la traction correspond à l'arrêt de la traction. En outre, pour palier à une défaillance d'alimentation, il est courant d'avoir un état restrictif ayant un niveau logique zéro correspondant à une absence d'énergie.

Les sorties distantes sont des sorties qui permettent, par exemple, d'envoyer des messages à une unité de gestion du trafic. Les messages envoyés sont par, exemple, des messages d'état du véhicule et des messages de positionnement.

La mémoire du calculateur sert à mémoriser des données et des programmes. Parmi les programmes, celle-ci comporte un programme de calcul pour déterminer en sécurité l'état des sorties en fonction des données d'entrées et de variables internes. Un autre programme concerne le fonctionnement en redondance objet de l'invention. Les programmes contenus dans la mémoire sont constitués d'instruction compréhensible par le processeur pour que celui-ci puisse les exécuter.

Chacun des calculateurs 10 et 20 dispose des mêmes programmes pour pouvoir effectuer les mêmes calculs. Le programme de calcul est exécuté cycliquement afin d'obtenir de manière régulière un calcul d'états de sortie en fonction d'états d'entrée. Le temps de calcul est très rapide afin d'obtenir un calcul dit « temps réel» permettant de réagir au plus vite. A titre d'exemple, un cycle de calcul est réalisé, par exemple, en cent millisecondes.

Le calcul des états de sortie effectué par chaque calculateur 10 et 20 consiste à, lors de chaque cycle, échantillonner toutes les entrées, effectuer les calculs nécessaires pour déterminer les états de sortie et fournir ces états sur les différentes sorties afin, d'une part, de commander, par exemple, les organes du véhicule et, d'autre part, d'informer au moins une unité de gestion du trafic. Le calcul des états de sortie est effectué de manière sécuritaire par chaque calculateur, c'est à dire que, même en cas de défaillance, les états de sortie fournis par chaque calculateur de manière indépendante doivent correspondre à un état de sécurité pour les passagers du véhicule.

Chaque calculateur est muni de moyens de sécurisation qui permettent de détecter leur propre défaillance. Les moyens de sécurisation participent activement à la sécurité intrinsèque du calculateur. Selon une technique connue, les moyens de sécurisation coopèrent avec le processeur afin d'effectuer des calculs codés en parallèle des programmes qui doivent être sécurisés afin de détecter une éventuelle incohérence dans le déroulement des programmes. D'autres techniques connues pourraient être utilisées dans ce but, mais l'invention ne s'y attardera pas, En cas de détection d'une défaillance, les moyens de sécurisation neutralisent assez rapidement le calculateur en positionnant toutes ses sorties dans un état restrictif. Une fois neutralisé, le calculateur peut fonctionner à nouveau à condition d'être réinitialisé.

Ce système de traitement est, par exemple, placé dans un véhicule ferroviaire automatique. Les entrées locales correspondent à des entrées d'information provenant d'éléments du véhicule. Les entrées distantes sont des entrées provenant de l'extérieur du véhicule via par exemple une liaison radio qui permet de communiquer avec l'unité de gestion du trafic. Les sorties distantes sont des sorties qui servent à envoyer des messages à l'unité de gestion du trafic, par exemple à l'aide de la liaison radio. Les sorties sécurisées sont des sorties de commande d'organes du véhicule. Les liaisons bidirectionnelles de synchronisation des calculateurs 10 et 20 sont reliées ensemble afin d'assurer la synchronisation des deux calculateurs. Les entrées/sorties bidirectionnelles de communication des deux calculateurs sont reliées ensembles afin que les deux calculateurs puissent échanger des données entre eux,

Un circuit de commande 30 fonctionne en parallèle des calculateurs 10 et 20 et reçoit en permanence ou de manière très régulière une information de fonctionnement de chaque calculateur 10 et 20. L'information de fonctionnement est fournie par les moyens de sécurisation de chaque calculateur 10 et 20 et indique si le calculateur est défaillant ou s'il fonctionne de manière normale. Le circuit de commande 30 détermine lequel des calculateurs 10 ou 20 doit être maître et lequel doit être esclave. La détermination de l'état maître ou esclave d'un calculateur se fait à l'aide d'un programme qui détermine un maître en fonction de données arbitraires (par exemple l'heure ou le jour), de statistique de fiabilité ou de données de maintenance. Mais le circuit de commande 30 prend également en considération les défaillances des calculateurs pour changer de maître si cela est nécessaire. Lorsqu'un calculateur 10 ou 20 se détecte défaillant, le circuit de commande 30 réagit pour s'assurer que le calculateur fonctionne en esclave ou, s'il était auparavant maître, de le faire passer en esclave. Le circuit de commande 30 permet en outre de garantir, de manière sûre, qu'un seul des deux calculateurs est désigné comme maître.

Les sorties sécurisées sont reliées à un circuit d'addition 40 qui dans la réalité peut être, par exemple, réalisé à l'aide de OU câblés en reliant ensemble les sorties de chacun des calculateurs. A cet effet, il convient que chaque calculateur dispose de sorties autorisant ce type de câblage. L'intérêt d'utiliser des OU câblés et qu'il suffit de positionner toutes les sorties d'un calculateur à zéro pour que celles-ci ne soient pas prises en compte (il est rappelé que l'état zéro ou l'absence d'énergie d'une sortie correspond à l'état restrictif de celle-ci). Cela permet également d'avoir un système d'aiguillage relativement simple et donc sûr.

Comme connu notamment par l'article de Essamé et al., la mise en redondance de deux calculateurs de type sécuritaire entraîne une réaction qui peut être non sécuritaire. Afin, notamment de pallier à certains problèmes liés à la mise en redondance, la liaison de synchronisation entre les deux calculateurs 10 et 20 permet de s'assurer de la bonne synchronisation temporelle des deux calculateurs 10 et 20. Egalement, la liaison de communication bidirectionnelle entre les deux calculateurs 10 et 20 sert à échanger des données entre les deux calculateurs. Les données échangées sont par exemple les données d'entrée et de sortie des deux calculateurs 10 et 20, ou encore des données internes pour mettre à jour le contexte d'un calculateur avec le contexte de l'autre calculateur. Les données échangées par cette liaison de communication permettent de faire fonctionner les deux calculateurs avec un même contexte, en particulier lors d'une réintégration (d'un calculateur). Cependant, comme déjà citée précédemment : une fois qu'ils sont en mode redondé, les deux calculateurs s'assurent uniquement qu'ils prennent bien les mêmes entrées et qu'ils ont bien les mêmes sorties. De là, les données échangées par cette liaison de communication permettent de faire fonctionner les deux calculateurs en redondance tout en garantissant la sécurité du système.

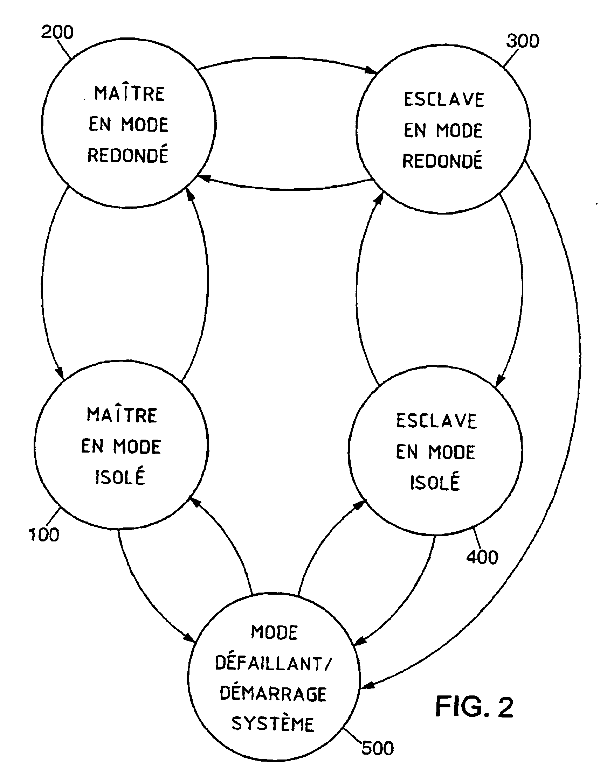

Pour réaliser la mise en redondance des deux calculateurs 10 et 20, on définit pour chaque calculateur la possibilité de fonctionner dans un état maître ou dans un état d'esclave, l'état maître ou esclave étant déterminé par le circuit de commande 30. Par ailleurs, on définit également deux modes de fonctionnement, un mode dit redondé, où les deux calculateurs travaillent simultanément et un mode dit isolé où un seul calculateur est actif. En outre, lorsqu'un calculateur est défaillant, il est redémarré et réinitialisé. La figure 2 représente un diagramme d'états de fonctionnement d'un calculateur qui peut prendre un état parmi les cinq états représentés, à savoir un état 100 où le calculateur fonctionne en maître et en mode isolé, un état 200 où le calculateur fonctionne en maître et en mode redondé, un état 300 où le calculateur fonctionne en esclave et en mode redondé, un état 400 où le calculateur fonctionne en esclave et en mode isolé, et un état 500 ou le calculateur fonctionne selon un mode de défaillance ou de démarrage du système. Les flèches entre les différents états représentent les changements d'état autorisés selon l'invention.

Ainsi, lorsqu'un calculateur maître fonctionne en mode isolé 100, celui-ci peut évoluer vers le mode redondé en restant maître 200 ou vers le mode de défaillance 500. Lorsqu'un calculateur maître fonctionne en mode redondé 200, celui-ci peut évoluer vers le mode isolé en restant maître 100 ou vers l'état d'esclave en restant en mode redondé 300. Lorsqu'un calculateur esclave fonctionne en mode redondé 300, le calculateur peut évoluer vers l'état de maître en restant en mode redondé 200, vers le mode isolé en restant esclave 400 ou vers le mode de défaillance 500. Lorsqu'un calculateur esclave fonctionne en mode isolé 400, celui-ci peut évoluer vers le mode redondé en restant esclave 300, sous condition que son contexte soit identique au contexte du maître, ou vers le mode de défaillance 500. Lorsqu'un calculateur fonctionne en mode de défaillance 500, celui-ci peut évoluer vers l'état d'esclave en mode isolé 400 ou vers l'état de maître en mode isolé 100. L'évolution d'un calculateur de l'état de défaillance vers l'état de maître en mode isolé 100 ne se produit que lorsque les deux calculateurs sont dans le mode de défaillance 500, c'est-à-dire au démarrage ou au redémarrage de tout le système. Ces différentes évolutions d'un mode de fonctionnement vers l'autre sont limitées afin de garantir qu'un calculateur dont le contexte n'est pas cohérent avec l'état du système ne puisse prendre la main.

Les calculateurs fonctionnent toujours dans le même mode, soit redondé, soit isolé. Le circuit de commande 30 permet de garantir qu'un seul calculateur est maître, mais chaque calculateur 10 ou 20 détermine en sécurité le mode de fonctionnement à appliquer.

Le mode redondé est le mode de fonctionnement nominal du protocole de fonctionnement selon l'invention. Lorsque l'on est en mode redondé, les deux calculateurs fonctionnement en parallèle et il est toujours possible que l'un des deux calculateurs prenne le relais de l'autre en cas de défaillance.

En mode isolé, seul le calculateur maître est considéré comme fonctionnant de manière sécuritaire. Le calculateur esclave est considéré comme n'ayant pas un fonctionnement correct et doit être redémarrer, il se retrouve alors dans un état d'attente où celui-ci va tenter de regagner le mode redondé.

Le démarrage consiste à réinitialiser toutes les données internes du calculateur puis à se placer en mode isolé dès que le démarrage a eu lieu.

### Détermination du maître et de l'esclave :

Cette étape sert à déterminer en fonction de données arbitraires ou statistiques ou encore de maintenance lequel des calculateurs 10 ou 20 (selon la figure 1) doit être désigné comme maître. A titre d'exemple, une donnée arbitraire peut déterminer que les jours pairs on désigne le calculateur 10, ci-après U1, comme maître et les jours impairs le calculateur 20, ci-après U2, comme maître. Une donnée statistique peut par exemple déterminer le choix en fonction d'un taux de panne de U1 et U2. Une donnée de maintenance peut orienter le choix de U1 ou U2 en fonction de la réalisation de tâches de maintenance réalisées par les calculateurs pendant leur fonctionnement en privilégiant comme maître le calculateur le plus disponible.

### Fonctionnement en mode redondé :

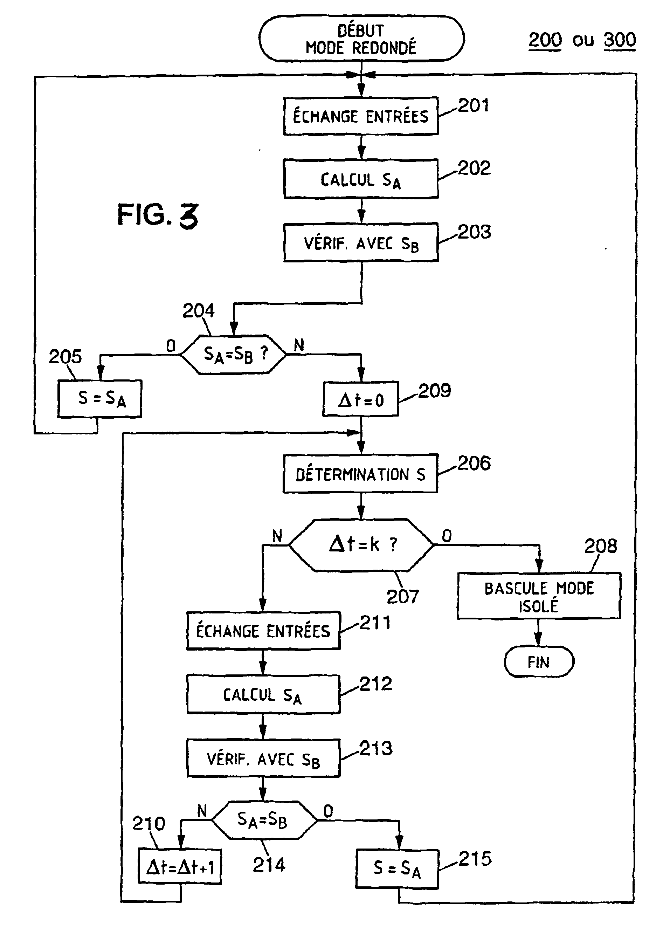

Le fonctionnement en mode redondé correspond au fonctionnement nominal du système de traitement. L'un des calculateurs fonctionne en maître et l'autre en esclave. Cependant, les deux calculateurs fonctionnent en parallèle en utilisant les mêmes données pour obtenir normalement les mêmes résultats. La figure 3 représente l'organigramme de fonctionnement d'un calculateur fonctionnant en mode redondé. La seule différence de fonctionnement entre un maître et un esclave concerne les sorties distantes qui sont neutralisées par le calculateur esclave.

Selon le protocole mis en oeuvre dans l'invention, les deux calculateurs s'assurent mutuellement d'être synchronisés l'un avec l'autre et échangent leurs entrées, étape 201, l'un avec l'autre afin de garder un même contexte. En effet, chaque calculateur reçoit des entrées locales à partir de capteurs qui lui sont propres ou de capteurs communs aux deux calculateurs 10 et 20. Chaque calculateur échantillonne les entrées locales. Même si les calculateurs 10 et 20 sont synchronisés entre eux, une entrée analogique peut évoluer entre les deux instants d'échantillonnage propres à chaque calculateur. Ainsi, il est possible qu'une même entrée prise en compte par chaque calculateur ait une valeur différente et risque d'entraîner des états de sortie différents. A cet effet, les calculateurs échangent entre eux leurs données d'entrée afin de rendre leurs entrées identiques.

Puis chaque calculateur lance son programme de calcul, étape 202. Le programme de calcul de chaque calculateur détermine alors des états de sortie SA en fonction des entrées. Les programmes de calcul sont identiques et les résultats doivent normalement être les mêmes.

A l'issu du calcul, chaque calculateur reçoit les états de sortie S_{B} calculés par l'autre calculateur afin d'effectuer une vérification de redondance, étape 203.

Comme indiqué précédemment, et sans qu'il y ait une défaillance de l'un des calculateurs, ceux-ci peuvent quand même avoir un fonctionnement non identique qui est source de défaillance globale du système. La comparaison des états de sortie des deux calculateurs sert a détecter une divergence des sorties, test 204.

Si tous les états de sortie sont identiques, ce qui correspond à un fonctionnement normal, alors le calculateur maître envoie les messages calculés sur les sorties distantes à destination d'une unité distante, et les deux calculateurs envoient simultanément leurs états de sortie calculés SA sur leurs sorties S, étape 205. Les états de sortie des deux calculateurs se recombinent à l'aide du circuit d'addition 40. Puis on effectue un nouveau cycle de calcul en échangeant à nouveau les entrées, retour à l'étape 201. C'est le fonctionnement normal du système.

Si pendant le fonctionnement normal du système l'un des calculateurs 10 ou 20 est défaillant et si celui-ci était le calculateur maître, le circuit de commande 30 échange les calculateurs maître et esclave, La prise en compte de la qualité de maître et d'esclave se fait alors avant d'effectuer à nouveau l'étape 201.

Lors de la comparaison des sorties, il est possible de détecter une divergence sur une ou plusieurs sorties. La divergence se caractérise par au moins un état de sortie différent pour les deux calculateurs. Cette divergence indique que la sécurité du système risque de ne plus être assurée puisque les deux calculateurs ont des comportements antagonistes. Le basculement sur un des deux calculateurs n'est pas évident à déterminer de manière instantanée. En effet, il peut très bien y avoir une divergence sur une sortie sans qu'aucun des deux calculateurs n'ait une défaillance. Cette divergence peut être une divergence ponctuelle sans aucune incidence, ou peut également être l'annonce d'une défaillance plus grave du système. L'arrêt arbitraire de l'un des deux calculateurs risquerait de le rendre indisponible alors que l'autre calculateur s'avèrerait être un calculateur défaillant.

En cas de divergence, plusieurs cas sont à considérer. Un premier cas concerne les sorties distantes. Ces sorties distantes correspondent à des messages sur l'état du véhicule et sa position qui sont envoyés à l'unité distante. En cas de divergence sur les sorties distantes, il convient de ne pas émettre de message. Il est préférable de ne pas envoyer un message plutôt que d'envoyer un message faux. Si la divergence persiste sur les sorties distantes, il conviendra alors de basculer en mode isolé. Une telle opération peut être réalisée en quelques cycles de calcul. Ce premier cas n'étant pas critique et étant différents des sorties sécurisées, il n'est pas traité dans les organigrammes décrits.

Un deuxième cas, plus préoccupant, concerne les sorties sécurisées. On distingue des sorties sécurisées de type temporisables et des sorties sécurisées de type non temporisables. Une sortie sécurisée est considérée temporisable si son maintien dans un état permissif pendant une certaine durée est possible sans que cela nuise à la sécurité des passagers malgré qu'elle doive passer dans un état restrictif. Une sortie sécurisée est considérée non temporisable si celle-ci risque par son maintien à un état permissif de nuire à la sécurité des passagers.

En cas de divergence des deux calculateurs, on passe dans un mode de fonctionnement restrictif. Les calculateurs déterminent alors les états de sortie S à appliquer de manière restrictive, étape 206. Quelque soit le type de sortie sécurisée considérée où une divergence se produit, il convient, selon l'invention, d'interdire toute transition d'un état restrictif vers un état permissif de la sortie sécurisée.

S'il s'agit d'une divergence sur une sortie sécurisée non temporisable, il convient de forcer son état à un état restrictif.

S'il s'agit d'une divergence sur une sortie sécurisée temporisable, il est possible de maintenir son état à l'état précédent. La détermination de l'état doit nécessairement éviter de réaliser une transition d'un état restrictif vers un état permissif. En outre, un calculateur ne détermine pas de sortie permissive s'il a calculé une sortie restrictive. La détermination ainsi faite par les deux calculateur peut se trouver être la même ou être toujours divergente, toutefois la combinaison des sorties effectuées à l'aide du circuit d'addition 40 assure le maintien de la sortie divergente à l'état précédent.

Les états de sortie S étant déterminés et appliqués, il convient alors de déterminer si la divergence n'était qu'une divergence ponctuelle ou si la divergence est liée à une défaillance de l'un des deux calculateurs.

Si la divergence persiste pendant une durée de divergence Δt allant au-delà d'une durée prédéterminée k, test 207, alors les calculateurs basculent en mode isolé, étape 208. Dès lors qu'un calculateur 10 ou 20 bascule en mode isolé, il force l'autre calculateur 20 ou 10 à basculer. La durée de divergence est mesurable en nombre de cycles de calcul, Cette durée de divergence Δt est mise à zéro dès qu'une divergence est constatée, étape 209, et elle est, par exemple incrémentée après chaque cycle de calcul divergent, étape 210.

Tant que la durée prédéterminée k n'est pas atteinte, les cycles de calcul s'enchaînent en échangeant les entrées, étape 211, en réalisant le calcul des états de sortie S_{A}, étape 212, et en comparant les états calculés S_{A} avec les états S_{B} calculés par l'autre calculateur, étape 213 et test 214.

Si lors d'un cycle de calcul, les sorties ne sont plus divergentes, alors le système va reprendre son mode de fonctionnement normal en appliquant sur ses sorties S les états de sortie calculés S_{A}, étape 215. Les calculateurs exécutent ensuite l'étape 201.

Tant qu'un cycle de calcul fait apparaître une divergence, le fonctionnement reste restrictif. On incrémente la durée de divergence Δt et on détermine les états de sortie S de manière restrictive à l'étape 208.

En cas de divergence, l'état restrictif d'une sortie risque d'être maintenu tant qu'il y a divergence des deux calculateurs. Si le fonctionnement restrictif dure trop longtemps, il peut y avoir indisponibilité. Pour éviter cela, il convient d'utiliser une durée prédéterminée k relativement brève tout en étant suffisamment longue pour permettre une commutation maître/esclave. A titre d'exemple, une durée prédéterminée k égale à deux ou trois cycles de calcul convient.

Si pendant la durée prédéterminée un calculateur est défaillant, les basculements d'état maître/esclave peuvent être déterminés par le circuit de commande 30. Cependant la prise en compte de l'état maître ou esclave ne se fait qu'après l'étape 210.

Il est à noter que lors de la détermination des sorties, étape 206, les deux calculateurs peuvent déterminer un même état si la sortie précédente était restrictive mais peuvent déterminer deux états différents si l'état précédent était permissif.

Afin de déterminer l'origine de la défaillance, chaque calculateur dispose d'un circuit de détection de dysfonctionnement (équivalent à un chien de garde) permettant d'indiquer au circuit de commande 30 s'il est ou non défaillant. Si c'est le calculateur maître qui est défaillant, alors il y a un basculement de maître et d'esclave réalisé par le circuit de commande 30. Ce basculement se produit pendant la durée prédéterminée k et reste complètement transparente au niveau du fonctionnement global du système de traitement.

Le calculateur défaillant sera automatiquement positionné en esclave par le circuit de commande 30, et le passage à l'état restrictif des sorties du calculateur défaillant provoque l'incohérence des sorties qui feront basculer le calculateur maître en mode isolé alors que le calculateur défaillant bascule en mode défaillant.

Ainsi, en cas de détection de défaillance du calculateur maître, le calculateur maître devient esclave et réciproquement. Le basculement en mode isolé se fait sans arrêt de fonctionnement du système tout en conservant le calculateur le plus apte pour commander le système.

### Fonctionnement en mode isolé :

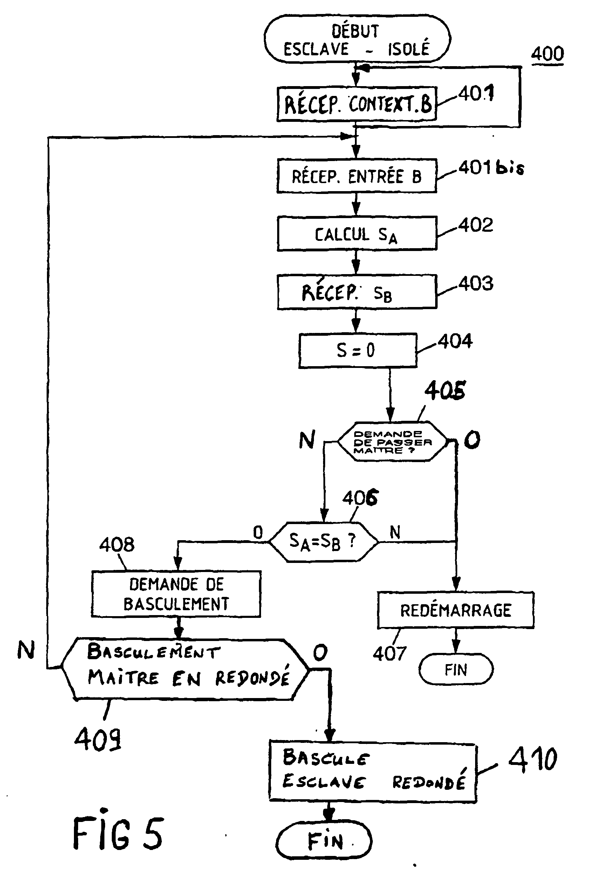

En mode isolé, seul le calculateur maître fonctionne de manière active, le calculateur esclave étant neutralisé. La figure 4 représente l'organigramme de fonctionnement d'un calculateur lorsque celui-ci est dans un état maître. La figure 5 représente l'organigramme de fonctionnement d'un calculateur lorsque celui-ci est dans un état esclave. Ces deux organigrammes sont exécutés en parallèle. Les deux calculateurs restent synchronisés, c'est-à-dire que les cycles de calcul se déroulent en même temps.

Le mode isolé est un mode temporaire de fonctionnement. II intervient lors du démarrage du système où les deux calculateurs démarrent depuis un état d'initialisation, en cas de détection d'une incohérence entre les deux calculateurs ou de redémarrage d'un seul des calculateurs. Le passage du mode de démarrage au mode isolé dans un état maître ne peut se produire que lorsque les deux calculateurs démarrent, ou redémarrent, ensemble et pour cela, les calculateurs doivent être à l'état d'initialisation (ensemble des variables et sorties du calculateur à l'état restrictif).

Le calculateur maître selon figure 4 ne prend en compte que ses entrées pour calculer les états de sortie SA, étape 101, qui sont appliqués, étape 102, sur les sorties S du système. Les entrées et sorties du calculateur esclave ne sont pas prises en compte par le calculateur maître. Ainsi, le système fonctionne de manière sécuritaire comme un unique calculateur. Toutefois, le calculateur maître communique ses entrées, des variables internes et ses états de sortie au calculateur esclave. En fonctionnement normal, le calculateur maître enchaîne ainsi les cycles de calcul. Ici, les sorties du calculateur esclave sont toutes forcées à être restrictives vers l'extérieur en mode isolé.

Afin de pouvoir fonctionner à nouveau en mode redondé, le calculateur maître doit d'abord transmettre son contexte au calculateur esclave. Puis, il vérifie si un basculement en mode redondé est possible, test 104. Un basculement de mode n'est possible que si le calculateur esclave en fait la requête après avoir constaté qu'il est convergent avec les états de sortie du calculateur maître. Le maître vérifie ensuite qu'il y a bien une identité de contexte, c'est-à-dire une identité des variables internes entre l'esclave et le maître. Pour réduire le temps de contrôle, une signature des variables internes peut être utilisée. Mais la vérification de la cohérence de contexte peut être réalisée sur plusieurs cycles de calcul. S'il y a basculement en mode redondé, étape 105, ce basculement entraîne simultanément le basculement du calculateur esclave en mode redondé.

En cas d'une défaillance du calculateur maître avant passage en mode redondé, ceci pourrait provoquer une indisponibilité du système jusqu'à un redémarrage du calculateur.

En mode isolé le système se comporte au pire comme un unique calculateur. Les états de sortie restent donc sûrs car le calculateur est intrinsèquement sûr.

Pour prévenir une indisponibilité du matériel, il est donc nécessaire de repasser en mode redondé le plus rapidement possible. Pour le calculateur esclave, le mode isolé est un mode de mise en cohérence avec le calculateur maître. Par exemple, un calculateur esclave se retrouvant en mode isolé vient de redémarrer avec des variables internes qui ont été réinitialisées, ou lorsqu'il était préalablement en mode redondé mais divergent avec le calculateur maître. Dans tous les cas, le contexte de fonctionnement du calculateur esclave est supposé différent du contexte de fonctionnement du calculateur maître.

Le calculateur esclave effectue des cycles de calcul où il reçoit les entrées du calculateur maître, étape 401, accompagnée de données contextuelles du calculateur maître pour mettre à jour ses variables internes. Le nombre de variables internes étant très important, par exemple quelques milliers, le transfert des variables internes peut être réparti sur plusieurs cycles de calcul. Certaines variables peuvent évoluer d'un cycle à l'autre. Celles-ci devront être dans ce cas transférées plusieurs fois. Puis, le calculateur esclave effectue un calcul des états de sortie S_{A}, étape 402. Il reçoit également les états de sortie S_{B} du calculateur maître, étape 403, pour vérifier ses états de sortie calculés S_{A}. Les sorties du calculateur esclave à destination de l'extérieur sont de toute façon positionnées à un état zéro, étape 404, afin que le circuit d'addition 40 fournisse les états de sortie uniquement du calculateur maître.

Une étape 405 est prévue, de façon à demander au calculateur esclave de passer maître, mais nous reviendrons sur ce point ultérieurement.

Sinon (cas N), le calculateur esclave vérifie si ses sorties sont divergentes ou non avec le calculateur maître, test 406.

Si le calculateur esclave est divergent test 406, cas N, alors il redémarre, étape 407.

Si le calculateur esclave est convergent, test 406, cas O, alors il demande au calculateur maître de basculer en mode redondé, étape 408. Cette demande déclenche le processus de vérification 409 du contexte à un cycle donné, celui-ci correspond à l'ensemble de ses données internes mémorisables et de sécurité par le calculateur maître. Si la vérification des données internes par le maître aboutit de manière positive, le maître bascule en mode redondé en entraînant le calculateur esclave en mode redondé, étape 410. La vérification du contexte correspondant à un cycle donné et effectuée par le maître peut se dérouler sur plusieurs cycles de calculs. Par contre, si au cours d'un de ces cycles de calcul, l'esclave n'a plus ses sorties cohérentes avec le calculateur maître selon l'étape 406, cas N, alors il redémarre en phase 407 et arrête de demander le basculement en mode redondé, ce qui annule la vérification faite par le maître.

Tant que le calculateur esclave est divergent, il n'est pas possible de rebasculer en mode redondé. Si le calculateur esclave n'arrive pas à converger avec le maître, c'est que l'échange des données Internes n'est pas suffisant et qu'il est préférable de réinitialiser le calculateur esclave pour repartir sur une meilleure base.

Dans le cas où le calculateur maître deviendrait à son tour défaillant alors que le calculateur esclave est isolé mais en fonctionnement, le circuit de contrôle 30 va indiquer à l'esclave de basculer en maître. Or, une telle prise de relais n'est pas envisageable car que le contexte de l'esclave n'est pas considéré cohérent avec l'état général du système. Il convient de redémarrer l'esclave, Le test 405 vérifie s'il est demandé à l'esclave de passer maître afin d'effectuer, après l'étape 405, si c'est le cas (O), l'étape de réinitialisation 407 et de redémarrer tout le système.

Le procédé qui vient d'être décrit correspond à un programme de supervision de la mise en redondance de deux calculateurs. L'homme du métier appréciera, pour mettre en oeuvre l'invention, de n'avoir à faire qu'une simple mise à jour de logiciel dans un système.

## Revendications

1. Procédé de contrôle d'un système de traitement nécessitant une grande sûreté pour un transport comportant au moins deux calculateurs (10, 20) disposant chacun de sorties sécurisées pouvant prendre un état restrictif ou un état permissif, l'état restrictif étant un état à caractère intrinsèquement sûr, lesdits calculateurs pouvant échanger des informations entre eux, chaque calculateur intrinsèquement sûr en disposant d'un même programme de calcul pour définir des états de sortie (SA), un calculateur étant maître et l'autre étant esclave où les deux calculateurs sont munis de moyens de sécurisation pour détecter leur propre défaillance de fonctionnement, et dans lequel, en cas de détection de défaillance du calculateur maître, le calculateur maître devient esclave, ledit procédé comportant:
a) un fonctionnement en mode redondé dans lequel chacun des calculateurs calcule (202, 212) des états de sortie, **caractérisé par** les étapes de :
- réception (203, 213) des états de sortie (Sa) déterminés par l'autre calculateur,
- comparaison (204, 214), pour chaque sortie, des états déterminés par les deux calculateurs,
- détection d'un état de divergence de fonctionnement si les deux calculateurs ont déterminé deux états différents pour une même sortie sécurisée,
- si une divergence est détectée pour au moins une sortie sécurisée, détermination (206) de l'état de ladite sortie divergente en interdisant une transition d'un état restrictif vers un état permissif,
b) un fonctionnement temporaire en mode isolé, dans lequel :
- si un état de divergence persiste au-delà d'une première durée prédéterminée (k), le fonctionnement des calculateurs bascule dans un mode isolé (208) où le calculateur maître ne prend plus en compte les états de sortie du calculateur esclave et où le calculateur esclave ne fournit plus de sorties à l'extérieur,
- pour le calculateur esclave, le mode isolé est un mode de mise en cohérence avec le calculateur maître,
- afin de pouvoir fonctionner à nouveau en mode redondé, le calculateur esclave demande au calculateur maître de basculer en mode redondé, en ce que ce basculement de mode n'est possible que si le calculateur esclave en fait la requête après avoir constaté qu'il est convergent avec les états de sortie du calculateur maître.

2. Procédé selon la revendication 1, dans lequel l'état de la sortie divergente garde un état déterminé lors d'un cycle de contrôle précédent.

3. Procédé selon l'une des revendications 1 ou 2, dans lequel l'état de la sortie divergente prend l'état restrictif.

4. Procédé selon une des revendications précédentes, dans lequel, en mode isolé, le calculateur esclave reçoit (401) des informations d'entrée et de contexte du calculateur maître, calcule (402) des états de sortie (S_{A}) en prenant en compte les informations du calculateur maître, compare (403) les états de sortie calculés (S_{A}) aux états de sortie (S_{B}) du calculateur maître et détecte (405) si un état de convergence existe pour lequel tous les états de sortie déterminés par le calculateur esclave correspondent aux états de sortie du calculateur maître.

5. Procédé selon une des revendications précédentes, dans lequel, en mode isolé, le calculateur maître vérifie (104) le contexte du calculateur esclave et bascule (105) en mode redondé s'il y a identité de contexte entre les deux calculateurs.

6. Procédé selon une des revendications précédentes, dans lequel, si un état de divergence persiste alors le calculateur esclave est réinitialisé (407).

7. Système de traitement disposant de deux calculateurs sécurisés (10, 20), chaque calculateur comportant :
- des entrées pour recevoir des données de l'extérieur,
- des sorties pour fournir des états de sortie pouvant prendre un état restrictif ou un état permissif,
- une mémoire pour mémoriser des programmes et des données,
- au moins un processeur pour exécuter les programmes contenus dans la mémoire, notamment un programme pour déterminer l'état des sorties à partir des données d'entrées et de variables internes mémorisées dans la mémoire,
- des moyens de synchronisation et de communication pour se synchroniser avec l'autre calculateur et échanger des informations avec celui-ci,
**caractérisé en ce que** chaque calculateur comporte des portions de programme d'ordinateur mémorisées dans la mémoire, lesdites portions de programme comportant des instructions exécutables par le processeur pour réaliser le procédé de l'une quelconque des revendications 1 à 6.

## Claims

1. Control method of a processing system requiring high reliability for a transport comprising
at least two computers (10, 20) each having secure outputs which can be in a restrictive or a permissive state, the restrictive state being a state of an intrinsically safe nature,
said computers being able to exchange information between each other, each computer intrinsically safe by having the same computing program to define output states (S_{A}), a computer being master and the other being slave where the two computers are provided with reliability means to detect their own malfunction, and
wherein, in the event of the detection of a master computer malfunction, the master computer becomes the slave,
said method comprising:
a) a running in redundant mode wherein each one of the computers calculates (202, 212) output states,
**characterized by** the steps of :
- acceptance (203, 213) of the output states (S_{A}) determined by the other computer,
- comparison (204, 214), for each output, between the states determined by both computers,
- detection of a state of running divergence if the two computers have determined two different states for the same secure output,
- if a divergence is detected for at least one secure output, determining (206) of the state of said divergent output by preventing a transition from a restrictive state to a permissive state,
b) a temporary running in isolated mode, wherein:
- if a state of divergence lasts after a first predetermined period of time (k), the running of the computers toggles into an isolated mode (208) where the master computer does not take the output states of the slave computer into account anymore and where the slave computer does not provide the outside with outputs anymore,
- for the slave computer, the isolated mode is a mode to ensure its getting back to consistency with the master computer,
- in order to run again in redundant mode, the slave computer asks the master computer to toggle into redundant mode, knowing that this mode switch is possible only if the slave computer is requesting it after having validated it is convergent with the output states of the master computer.

2. Method according to claim 1, wherein the state of the divergent output keeps a determined state during a previous control cycle.

3. Method according to claim 1 or 2, wherein the state of the divergent output changes to the restrictive state,

4. Method according to one of the previous claims, wherein, in isolated mode, the slave computer accepts (401) input and context information from the master computer, calculates (402) output states (S_{A}) by taking into account the information from the master computer, compares (403) the calculated output states (S_{A}) with the output states (S_{B}) of the master computer and detects (405) if a state of convergence exists for which all the output states determined by the slave computer correspond to the output states of the master computer.

5. Method according to one of the previous claims, wherein, in isolated mode, the master computer checks (104) the context of the slave computer and toggles (105) into redundant mode if there is an identity of context between the two computers.

6. Method according to one of the previous claims, wherein, if a state of divergence lasts then the slave computer is reset (407).

7. Processing system having two fail safe computers (10, 20), each computer comprising:
- inputs to accept data from the outside,
- outputs to provide output states which can be in a restrictive or a permissive state,
- a memory to store programs and data,
- at least one processor to execute the programs stored in the memory, especially a program to determine the state of the outputs on the basis of the input data and of internal variables stored in the memory,
- synchronization and communication means to synchronize itself with the other computer and exchange information with it,
**characterized in that** each computer comprises portions of computer program stored in the memory, said program portions comprising instructions which can be executed by the processor to complete the method of any one of the claims 1 to 6.

## Patentansprüche

1. Verfahren zur Kontrolle eines Rechnersystems für Verkehrsanwendungen, an das hohe Sicherheitsanforderungen gestellt werden, das mindestens zwei Rechner (10, 20) umfasst, von denen jeder über sichere Ausgänge verfügt, die einen restriktiven Zustand oder einen permissiven Zustand annehmen können, wobei der restriktive zustand ein eigensicherer Zustand ist, wobei die Rechner Informationen untereinander austauschen können, wobei jeder eigensichere Rechner über ein Rechenprogramm zur Definition der Ausgangszustände (S_{A}) verfügt, wobei ein Rechner Master und der andere Slave ist und die beiden Rechner mit Sicherungsmitteln versehen sind, um eigene Funktionsstörungen zu detektieren und im Fall der Detektion eines Fehlers des Master-Rechners der Master-Rechner zum Slave-Rechner wird, umfassend:
a) einen Betrieb im redundanten Modus, in dem jeder der Rechner Ausgangszustände berechnet (202, 212), **gekennzeichnet durch** die folgenden Schritte:
- Empfangen (203, 213) der Ausgangszustände (S_{B}), die vom anderen Rechner bestimmt werden,
- Vergleichen (204, 214) der Zustände, die von den beiden Rechnern bestimmt werden, für jeden Ausgang, Detektion eines divergierenden Betriebszustands, wenn die beiden Rechner für denselben sicheren Ausgang zwei verschiedene Zustände bestimmt haben,
- wenn eine Divergenz für mindestens einen sicheren Ausgang erkannt wurde, Bestimmung (206) des Zustands dieses divergierenden Ausgangs, wobei ein Übergang von einem restriktiven Zustand zu einem permissiven Zustand unterbunden wird;
b) einen vorübergehenden Betrieb im isolierten Modus, in dem:
- wenn ein divergierender Zustand über eine erste vorgegebene Zeitdauer (k) hinaus anhält, der Rechnerbetrieb in einen isolierten Modus umschaltet (208), in dem der Master-Rechner die Ausgangszustände des Slave-Rechners nicht mehr berücksichtigt und in dem der Slave-Rechner keine Ausgänge mehr bereitstellt,
- für den Slave-Rechner der isolierte Modus ein Modus zur Herstellung der Kohärenz mit dem Master-Rechner ist,
- um erneut im redundanten Modus arbeiten zu können, der Slave-Rechner den Master-Rechner auffordert, in den redundanten Modus umzuschalten, wobei diese Modusumschaltung nur möglich ist, wenn der Slave-Rechner sie anfordert, nachdem er festgestellt hat, dass er mit den Ausgangszuständen des Master-Rechners konvergiert.

2. Verfahren nach Anspruch 1, bei dem der Zustand des divergierenden Ausgangs einen Zustand behält, der bei einem vorangehenden Kontrollzyklus bestimmt wurde.

3. Verfahren nach einem der Ansprüche 1 oder 2, bei dem der Zustand des divergierenden Ausgangs den restriktiven Zustand annimmt.

4. Verfahren nach einem der vorangehenden Ansprüche, bei dem der Slave-Rechner im isolierten Modus Eingangs- und Kontextinformationen vom Master-Rechner empfängt (401), Ausgangszustände (S_{A}) berechnet (402), wobei er die Informationen des Master-Rechners berücksichtigt, die berechneten Ausgangszustände (S_{A}) mit den Ausgangszuständen (S_{B}) des Master-Rechners vergleicht (403) und detektiert (405), ob ein konvergenter Zustand vorliegt, bei dem alle vom Slave-Rechner bestimmten Ausgangszustände den Ausgangszuständen des Master-Rechners entsprechen.

5. Verfahren nach einem der vorangehenden Ansprüche, bei dem der Master-Rechner im isolierten Modus den Kontext des slave-Rechners überprüft (104) und in den redundanten Modus umschaltet (105), wenn Kontextidentität zwischen den beiden Rechnern vorliegt.

6. Verfahren nach einem der vorangehenden Ansprüche, bei dem der Slave-Rechner, wenn ein divergierender Zustand anhält, reinitialisiert wird (407).

7. Verarbeitungssystem mit zwei sicheren Rechnern (10, 20), wobei jeder Rechner Folgendes umfasst:
- Eingänge zum Empfangen der Daten von außerhalb,
- Ausgänge zur Bereitstellung der Ausgangszustände, die einen restriktiven Zustand oder einen permissiven Zustand annehmen können,
- einen Speicher zum Speichern der Programme und Daten,
- mindestens einen Prozessor zum Ausführen der im Speicher enthaltenen Programme, insbesondere eines Programms zum Bestimmen des Zustands der Ausgänge anhand der Eingangsdaten und anhand von internen Variablen, die im Speicher gespeichert sind,
- Mittel zur Synchronisation und Kommunikation, um sich mit dem anderen Rechner zu synchronisieren und Informationen mit diesem auszutauschen,
**dadurch gekennzeichnet, dass** jeder Rechner Rechnerprogrammabschnitte umfasst, die im Speicher gespeichert sind, wobei diese Programmabschnitte Anweisungen enthalten, die vom Prozessor ausgeführt werden können, um das verfahren eines der Ansprüche 1 bis 6 auszuführen.
